# EUROPÄISCHE PATENTSCHRIFT

(11) **EP 2 831 461 B1**
(45) Veröffentlichungstag und Bekanntmachung des Hinweises auf die Patenterteilung: **18.05.2016**
(21) Anmeldenummer: 13713793.1
(22) Anmeldetag: 21.03.2013
(51) Int. Cl.: F16D 65/18, F16D 55/226

(54) **BREMSDREHHEBEL EINER SCHEIBENBREMSE UND ENTSPRECHENDE SCHEIBENBREMSE**
BRAKE ROTARY LEVER OF A DISC BRAKE AND CORRESPONDING DISC BRAKE
LEVIER DE ROTATION D'UN FREIN À DISQUE ET FREIN À DISQUE CORRESPONDANT

(30) Priorität: 26.03.2012 DE 102012102581
(43) Veröffentlichungstag der Anmeldung: 04.02.2015
(73) Patentinhaber: KNORR-BREMSE Systeme für Nutzfahrzeuge GmbH, 80809 München (DE)
(72) Erfinder: KLINGNER, Matthias, 82272 Moorenweis (DE); CAMILO-MARTINEZ, Jose, 82008 Unterhaching (DE); STAAHL, Christian, 81929 München (DE); MILLER, Bernhard, 71263 Weil der Stadt (DE); TRIMPE, Robert, 82234 Weißling (DE)
(86) Internationale Anmeldenummer: PCT/EP2013/055900
(87) Internationale Veröffentlichungsnummer: WO 2013/143960

(56) Entgegenhaltungen:
- EP-A1- 0 555 682
- EP-A1- 0 614 025
- DE-A1-102009 018 223
- DE-B3-102008 037 774
- US-B1- 6 354 407

## Beschreibung

Die Erfindung betrifft einen Bremsdrehhebel einer Scheibenbremse nach dem Oberbegriff des Anspruchs 1. Die Erfindung bezieht sich auch auf eine Scheibenbremse, insbesondere für ein Kraftfahrzeug.

Bremsdrehhebel werden insbesondere bei Scheibenbremsen zum Zuspannen der Scheibenbremse verwendet. Der Bremsdrehhebel ist üblicherweise mit einer Walze in einem Bremssattel verschwenkbar gelagert und wirkt mit einem nockenförmigen Abschnitt mit einem Bremsbelag zusammen. Ein Hebelarm des Bremsdrehhebels kann zur Einleitung einer Zuspannkraft in den Bremsdrehhebel mit einem Krafterzeuger, z.B. einem Druckluftzylinder, zusammenwirken.

Derartige Scheibenbremsen sind üblicherweise druckluftbetätigt und mit automatisch wirkenden, mechanischen Belagverschleißnachstellvorrichtungen ausgestattet. Diese Belagverschleißnachstellvorrichtungen wirken sehr zuverlässig und verkleinern ein zu groß gewordenes Lüftspiel. Sie sind in unterschiedlichen Ausführungen bekannt, wie z.B. mechanische Nachsteller mit automatischem Einregeln eines Reibepunkts. Dabei wird bei jeder Bremsbetätigung die Nachstellvorrichtung, z.B. durch ein Abtriebselement des Bremsdrehhebels der Zuspannvorrichtung der Scheibenbremse aktiviert. Bei Verschleiß von Bremsbelägen und Bremsscheibe erfolgt ein automatisches Nachstellen der Beläge mittels der Belagverschleißnachstellvorrichtung z.B. durch eine Verstellbewegung von längenveränderlichen Druckstempeln.

Das Abtriebselement des Bremsdrehhebels zum Antreiben der Nachstellvorrichtung ist z.B. an dem Bremsdrehhebel angeschmiedet, bearbeitet oder über Stifte gebaut ausgeführt. Hier ist eine massive Ausführung erforderlich, da relativ hohe Antriebsmomente auf den Nachstellmechanismus übertragen werden müssen.

Das Dokument EP 0 555 682 A1 illustriert einen Drehantrieb für eine Stellspindel einer Scheibenbremse für Fahrzeuge

Die Aufgabe der vorliegenden Erfindung besteht darin, einen verbesserten Bremsdrehhebel zu schaffen.

Eine weitere Aufgabe ist, eine verbesserte Scheibenbremse bereitzustellen.

Die Aufgabe wird durch einen Bremsdrehhebel mit den Merkmalen des Anspruchs 1 gelöst.

Die Aufgabe wird auch durch eine Scheibenbremse mit den Merkmalen des Anspruchs 10 gelöst.

Ein erfindungsgemäßer Bremsdrehhebel einer Scheibenbremse, insbesondere für ein Kraftfahrzeug, weist an mindestens einer axialen Stirnseite des Bremsdrehhebels einen Abtriebsabschnitt mit jeweils einem Abtriebselement drehfest mit dem Bremsdrehhebel verbunden auf. Mindestens ein Abtriebselement eines der Abtriebsabschnitte ist als ein Einlegeteil ausgebildet.

Das Abtriebselement als Einlegeteil kann je nach Einsatzfall eingesetzt und befestigt werden. Bei einem schon vorhandenen Abtriebsabschnitt z.B. zum Antrieb einer Nachstellvorrichtung bei einer Scheibenbremse kann ein weiterer Abtriebsabschnitt mit dem Einlegeteil vorgesehen werden, um beispielsweise einen Bremsdrehhebelsensor zur Erfassung einer Position des Bremsdrehhebels anzutreiben.

So ist es möglich, dass der/die Abtriebsabschnitt/e z.B. Blechteile (Stanzteile) sind, in welchen das Abtriebselement als Einlegeteil integriert ist, wobei die Blechteile mit dem Bremsdrehhebel in einfacher Weise verbunden werden, z.B. mittels Befestigungsschrauben.

Eine erfindungsgemäße Scheibenbremse, insbesondere für ein Kraftfahrzeug, umfasst eine Zuspannvorrichtung mit einem Bremsdrehhebel, einer Belagverschleißnachstellvorrichtung, welche mindestens einen mechanischen Verschleißnachsteller aufweist, der vorzugsweise in eine Spindeleinheit der Scheibenbremse einsetzbar und über ein erstes Abtriebselement eines ersten Abtriebsabschnitts des Bremsdrehhebel mit dem Bremsdrehhebel gekoppelt ist. Der Bremsdrehhebel weist mindestens ein Abtriebselement eines der Abtriebsabschnitte als ein Einlegeteil auf.

Weitere vorteilhafte Ausgestaltungen sind in den Unteransprüchen angegeben.

In einer Ausführung ist das mindestens eine, als ein Einlegeteil ausgebildete Abtriebselement lösbar in dem Abtriebsabschnitt eingesetzt und befestigt. Dadurch ist eine einfache Anpassung des Bremsdrehhebels an unterschiedliche Antriebsaufgaben möglich.

In einer weiteren Ausführung ist das mindestens eine, als ein Einlegeteil ausgebildete Abtriebselement in dem Abtriebsabschnitt in einer Aufnahme formschlüssig aufgenommen. Damit wird eine einfache Montage erreicht.

Eine andere Ausführung sieht vor, dass das mindestens eine, als ein Einlegeteil ausgebildete Abtriebselement ein Zahnradsegment ist. So kann es z.B. eine Kronenradverzahnung oder/und eine Stirnradverzahnung aufweisen. Je nach Einsatzfall ist somit eine axiale oder radiale Antriebsmöglichkeit für eine Funktionseinheit, z.B. ein Sensor mit Drehantrieb oder auch z.B. Zahnstangenantrieb bei Stirnverzahnung gegeben.

Es ist auch möglich, dass das Zahnradsegment eine Triebstockverzahnung aufweist. Damit ist der Einsatzbereich erweitert.

In einer alternativen Ausführung kann das mindestens eine, als ein Einlegeteil ausgebildete Abtriebselement mindestens einen Stift aufweisen.

In einer weiteren Ausführung ist das mindestens eine, als ein Einlegeteil ausgebildete Abtriebselement aus einem Kunststoff oder einem Sinterwerkstoff hergestellt ist. Damit ist die Übertragung kleiner Drehmomente möglich, wie sie z.B. für Sensoren ausreichend ist. Zudem kann die Verzahnung auf diese Weise besonders filigran ausgestaltet sein, so dass auch kleine Sensorantriebe mit hoher Präzision angetrieben werden können.

Alternativ kann das mindestens eine, als ein Einlegeteil ausgebildete Abtriebselement aus einem metallischen Werkstoff mit hoher Festigkeit hergestellt sein. Somit ist auch der Einsatz zum Antrieb von Funktionseinheiten mit hohen Drehmomenten, wie z.B. eine Nachstellvorrichtung, möglich. Dadurch ist der Bremsdrehhebel für viele Einsatzbereiche einfach anpassbar.

Die Scheibenbremse kann in einer Ausführung druckluftbetätigt sein.

Der Bremsdrehhebel kann in einer Ausführung somit zwei Antriebe antreiben, beispielsweise zum Einen den Verschleißnachtsteller mit der Nachstellwelle und einer Mitnehmerwelle und zum Anderen einen Betätigungshub-Sensor.

Das zusätzliche oder zweite Abtriebselement als Einlegeteil ist an dem Bremsdrehhebel geführt.

Das zweite Abtriebselement als Einlegeteil kann in einer Ausführung aus einem Material mit geringerer Festigkeit als das Grundmaterial des Bremsdrehhebels gefertigt sein, z.B. aus Kunststoff (Spritzgussteil) oder Sintermaterial. Die Fertigung des Bremsdrehhebels kann somit vereinfacht werden.

Die Erfindung wird nun anhand einer beispielhaften Ausführung mit Bezug auf die beigefügten Zeichnungen näher erläutert. Hierbei zeigen:
- Fig. 1: eine schematische Perspektivansicht eines Ausführungsbeispiels einer erfindungsgemäßen Scheibenbremse mit einem erfindungsgemäßen Bremsdrehhebel; und
- Fig. 2: eine schematische Perspektivdarstellung des erfindungsgemäßen Bremsdrehhebels nach Fig. 1.

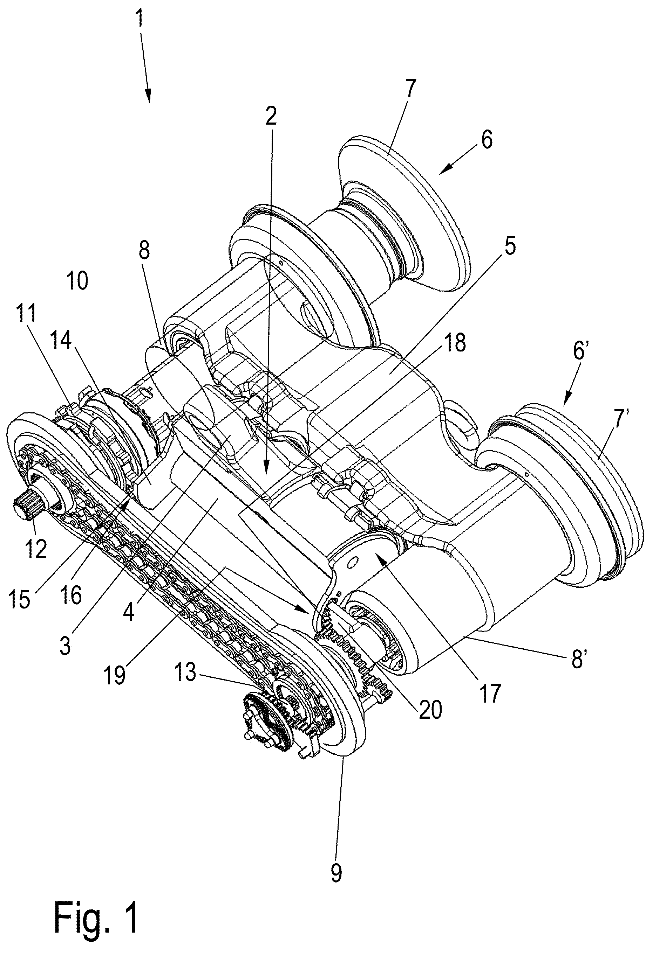

In Fig. 1 ist eine schematische Perspektivansicht eines Ausführungsbeispiels einer erfindungsgemäßen Scheibenbremse 1 mit einem erfindungsgemäßen Bremsdrehhebel 2 dargestellt.

In diesem Ausführungsbeispiel ist die Scheibenbremse 1 als zweistempelige Bremse mit einem nicht gezeigten Bremssattel, welcher eine nicht gezeigte Bremsscheibe übergreift, und einem Bremsdrehhebel 2 zur Zuspannung der Scheibenbremse 1 ausgebildet. Der Bremsdrehhebel 2 wird auch als Spreizmechanik bezeichnet, ist Teil einer Zuspannvorrichtung und weist einen Hebelarm 3 auf, welcher z.B. von einem Druckluftbremszylinder betätigbar ist. Der Bremsdrehhebel 2 ist hier über eine Lagerwalze 4 am Bremssattel um eine Längsachse der Lagerwalze 4 verschwenkbar gelagert und wird unten noch weiter erläutert.

Eine Brücke 5 steht mit dem Bremsdrehhebel 2 in Kontakt und ist von diesem beim Zuspannen und Lösen der Bremse betätigbar. Die Brücke 5 ist an ihren Enden jeweils mit einer Spindeleinheit 6, 6' über jeweils einen Druckstempel 8, 8' gekoppelt. Die in Fig. 1 rechts oben angeordneten Enden der Spindeleinheiten 6, 6' weisen jeweils ein Druckstück 7, 7' auf. Die Druckstücke 7, 7' stehen mit einem nicht gezeigten zuspannseitigen Bremsbelag in Kontakt, welcher auf einer Seite der nicht gezeigten Bremsscheibe der Scheibenbremse 1 angeordnet ist. Auf der anderen Seite der Bremsscheibe ist ein anderer Bremsbelag im Bremssattel festgelegt. Der Bremssattel kann beispielsweise ein Schiebesattel sein.

Ein Abstand zwischen einem Bremsbelag und der Bremsscheibe wird als Lüftspiel bezeichnet. Bei einem Bremsvorgang wird bei Betätigung der Bremse zunächst das Lüftspiel überbrückt, indem der Bremsbelag durch die vom Bremshebel 2 betätigte Brücke 5 gegen die Bremsscheibe der Bremse verstellt wird. Aufgrund des Verschleißes der Bremsbeläge und auch der Bremsscheibe wird das Lüftspiel vergrößert.

Der Begriff "Reibepunkt" ist der Punkt, in welchem der Bremsbelag an der Bremsscheibe der Scheibenbremse 1 anliegt. Der Reibepunkt wird beim Zuspannen nach Überbrückung des Lüftspiels erreicht. Weiteres Zuspannen bewirkt dann durch Anpressen des Bremsbelags an die Bremsscheibe eine Bremsung. Ein Lösen der Zuspannvorrichtung bewirkt eine Umkehrung des oben beschriebenen Vorgangs.

Die Scheibenbremse 1 umfasst in der in Fig. 1 gezeigten Ausführung einen Verschleißnachsteller 10, welcher zur Nachstellung des Bremsbelags/der Bremsbeläge bei Verschleiß dient, um das ursprüngliche Lüftspiel wiederherzustellen.

Der Verschleißnachsteller 10 wird hier nicht näher erläutert, er kann z.B. wie in DE 10 2004 037 771 A1 beschrieben ausgestaltet sein. Er ist in der Spindeleinheit 6 eingesetzt und mit dieser gekoppelt. Ein Nachstellerantriebsrad 11 des Verschleißnachstellers 10 ist für den Antrieb des Verschleißnachstellers 10 durch den Bremsdrehhebel 2 vorgesehen, was unten noch näher erläutert wird. Der Verschleißnachsteller 10 weist eine Nachstellerwelle 12 auf, deren zuspannseitiges Ende hier mit einem Kettenrad drehfest verbunden ist. Das Kettenrad steht in diesem Ausführungsbeispiel über eine Kette mit einem Kettenrad einer Mitnehmerwelle 13 in Verbindung. Auf diese Weise ist der Verschleißnachsteller 10 mit der Mitnehmerwelle 13 gekoppelt, welche mit der Spindeleinheit 6' verbunden ist und eine Nachstellbewegung des Verschleißnachstellers 10 der einen Spindeleinheit 6 auf die andere Spindeleinheit 6' synchron überträgt. Die Mitnehmerwelle 13 ist parallel zum Verschleißnachsteller 10 angeordnet. Die zuspannseitigen Enden der Nachstellerwelle 12 und der Mitnehmerwelle 13 erstrecken sich durch eine Halterung 9, welche unterhalb der Kettenräder angeordnet ist.

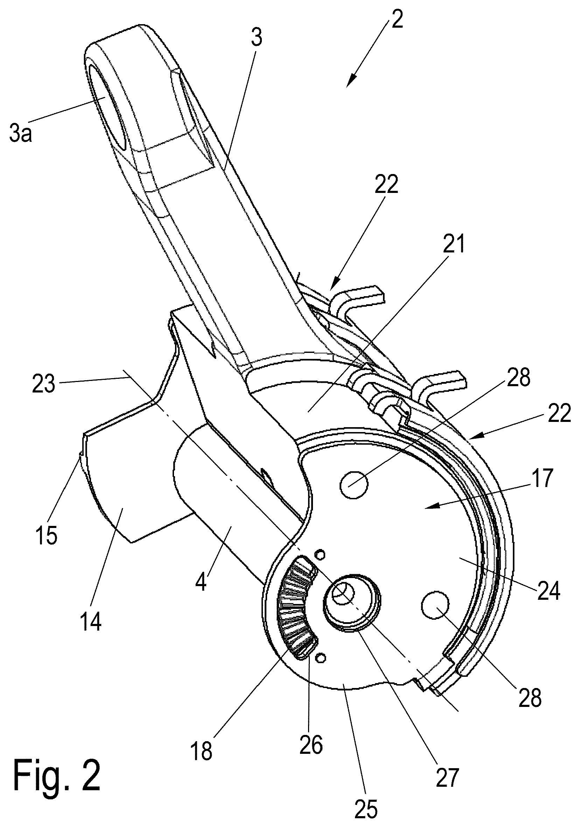

Der Verschleißnachsteller 10 wird durch jede Zustellbewegung des Bremsdrehhebels 2, bei welcher der Bremsdrehhebel 2 um eine Lagerwalzenachse 23 (siehe Fig. 2) der Lagerwalze 4 verschwenkt, angetrieben. Die Lagerwalzenachse 23 liegt rechtwinklig zu einer Bremsscheibendrehachse der Bremsscheibe der Scheibenbremse 1. Der Verschleißnachsteller 10 steht über sein Nachstellerantriebsrad 11 mit einem ersten Abtriebsabschnitt 14 des Bremsdrehhebels 2 in einer ersten Abtriebskopplung 16 in Eingriff. Das Nachstellerantriebsrad 11 weist z.B. Zähne auf, welche beispielsweise gabelförmig ausgebildet sind und mit einem oder mehreren ersten Abtriebselementen 15 des ersten Abtriebsabschnitts 14 des Bremsdrehhebels 2 in Eingriff stehen.

Der Nachstellerantriebsabschnitt 17 des Bremsdrehhebels 2 ist hier scheibenförmig oder scheibensegmentförmig ausgebildet und an dem axialen, stirnseitigen Ende der Lagerwalze 4 und des Bremsdrehhebels 2 am Bremsdrehhebel 2 drehfest angebracht, welches zu der Spindeleinheit 6 mit dem Verschleißnachsteller 10 weist. Hier sind die ersten Abtriebselemente 15 als Zähne eines Kronenrads gestaltet und stehen in Richtung der Lagerwalzenachse 23 zur Stellspindel 6 hervor. Die Lagerwalze 4 und die Nachstellerwelle 12 sind rechtwinklig zueinander angeordnet.

Die ersten Abtriebselemente 15 des ersten Abtriebsabschnitts 14 des Bremsdrehhebels 2 können auch entweder an dem Bremsdrehhebel 2 angeschmiedet, bearbeitet oder als Stifte, z.B. einer Triebstockverzahnung, geformt ausgebildet sein. Eine massive Ausführung der in Eingriff stehenden Elemente dieser ersten Abtriebskopplung 16 ist zum Antrieb des Verschleißnachstellers 10 notwendig, da hier relativ hohe Antriebsmomente auf den Verschleißnachsteller 10 übertragen werden müssen.

Wenn bei der Zustellbewegung des Bremsdrehhebels 2 (noch) kein Verschleiß vorliegt, dann erfolgt aufgrund z.B. einer Überlastkupplung des Verschleißnachsteller 10 keine Übertragung einer Antriebsbewegung auf die Nachstellerwelle 12. Liegt jedoch ein Verschleiß vor, so wird die Antriebsbewegung von dem Nachstellerantriebsrad 11 auf die Nachstellerwelle 12 des Verschleißnachstellers 10 übertragen, um den Bremsbelag nachzustellen und das Lüftspiel auf den ursprünglichen Wert einzustellen. Mit der Kette als Synchronisationsmittel wird diese Antriebsbewegung der Nachstellerwelle 12 zur Verschleißnachstellung auf die Mitnehmerwelle 13 übertragen.

In diesem Ausführungsbeispiel weist der Bremsdrehhebel 2 einen zweiten Abtriebsabschnitt 17 auf. Der zweite Abtriebsabschnitt 17 ist auf der dem ersten Abtriebsabschnitt 14 gegenüberliegenden axialen Stirnseite der Lagerwalze 4 und des Bremsdrehhebels 2 angeordnet und weist zu der Spindeleinheit 6' mit der Mitnehmerwelle 13. Ähnlich wie der erste Abtriebsabschnitt 14 des Bremsdrehhebels 2 ist auch der zweite Abtriebsabschnitt 17 hier scheibenförmig oder scheibensegmentförmig ausgebildet. Im Zusammenhang mit Fig. 2 wird der zweite Abtriebsabschnitt 17 unten noch im Detail beschrieben.

Der zweite Abtriebsabschnitt 17 ist mit einem zweiten Abtriebselement 18 versehen, welches in einer zweiten Abtriebskopplung 19 mit einem zweiten Antriebsrad 20 in Eingriff steht. Das zweite Antriebsrad 20 gehört zu einem nicht näher erläuterten Sensor zur Erfassung der Position des Bremsdrehhebels 2 über einen Schwenkwinkel des Bremsdrehhebels 2. Dieser Sensor wird von dem Bremsdrehhebel 2 bei dessen Betätigung über den zweiten Abtriebsabschnitt 17 angetrieben.

Fig. 2 zeigt eine schematische Perspektivdarstellung des erfindungsgemäßen Bremsdrehhebels 2 nach Fig. 1.

Der Bremsdrehhebel 2 umfasst einen Körper 21 mit einem halbkreiszylinderförmigen Querschnitt, in welchen die Lagerwalze 4 eingebracht oder eingeformt ist. Die Lagerwalzenachse 23 verläuft parallel zu einer Achse des Körpers 21, aber in einem Abstand zu dieser, so dass der Körper 21 bei Verschwenkung um die Lagerwalzenachse 23 eine exzentrische Bewegung ausführt. Diese Bewegung wird (siehe Fig. 1) durch Lagerschalen 22 auf dem halbkreisförmigen Umfang des Körpers 21 auf die Brücke 5 übertragen. Eine flache Seite des Körpers 21 gegenüberliegend den Lagerschalen 22 weist zur Zuspannseite der Scheibenbremse 1. In der Mitte dieser flachen Seite ist ein Hebelarm 3 mit dem Körper 21 verbunden und erstreckt sich radial aus der Mitte des Körpers 21 heraus. Die zur Zuspannseite weisende Unterseite des Hebelarms 3 liegt beim Heraustreten des Hebelarms 3 aus dem Körper 21 in der gleichen Ebene wie dessen flache Seite. An dem freien Ende des Hebelarms 3 ist ein Krafteinleitungsabschnitt 3a eingeformt, welcher für ein Zusammenwirken mit einem Kolben, z.B. eines Druckluftbremszylinders, vorgesehen ist. Über den Krafteinleitungsabschnitt 3a wird eine Zuspannkraft in den Hebelarm 3 des Bremsdrehhebels 2 zum Zuspannen der Scheibenbremse 1 eingeleitet.

Die axialen Stirnseiten der Lagerwalze 4 liegen in gleichen Ebenen mit den darüber angeordneten axialen Stirnseiten des Körpers 21. An den in Fig. 2 links angeordneten axialen Stirnseiten von Lagerwalze 4 und Körper 21 ist der erste Abtriebsabschnitt 14 in Gestalt einer ausgesparten Scheibe fest angebracht oder angeformt. Ein plattenförmiger Abschnitt des ersten Abtriebsabschnitts 14 weist zur Zuspannseite. Das erste Abtriebselement 15 oder auch mehrere erstrecken sich parallel zur Richtung der Lagerwalzenachse 23 nach außen.

An den in Fig. 2 rechts angeordneten axialen Stirnseiten von Lagerwalze 4 und Körper 21 ist der zweite Abtriebsabschnitt 17 in Gestalt einer Scheibe mit unterschiedlichen Durchmessern ebenfalls wie der erste Abtriebsabschnitt 14 fest angebracht oder angeformt. In dem in Fig. 2 gezeigten Ausführungsbeispiel ist der zweite Abtriebsabschnitt 17 auf der axialen Stirnseite des Körpers 21 mit einem halbkreisförmigen Befestigungsabschnitt 24, welcher einen etwas kleineren Radius als der Körper 21 aufweist, über Befestigungsöffnungen 28 mit nicht gezeigten Befestigungsmitteln an dem Körper 21 angebracht. Die Befestigungsmittel können z.B. Schrauben sein.

An den Befestigungsabschnitt 24 schließt sich ein weiterer halbkreisförmiger Aufnahmeabschnitt 25 mit einem kleineren Radius an. An der zum Hebelarm 3 weisenden Seite geht der Umfang des Aufnahmeabschnitts 25 an Übergangsstellen zu dem Umfang des halbkreisförmigen Befestigungsabschnitts 24 über Ausrundungen über. Es ist deutlich zu erkennen, dass die Mittelpunkte des halbkreisförmigen Befestigungsabschnitts 24 und des halbkreisförmiger Aufnahmeabschnitt 25 in einem Abstand angeordnet sind, welcher der Exzentrizität des Bremsdrehhebels 2, d.h. dessen Körpers 21 zu der Lagerwalze 4, entspricht. Durch den Mittelpunkt des halbkreisförmigen Aufnahmeabschnitts 25 verläuft die Lagerwalzenachse 23. So verschwenkt bei einer Verschwenkung des Bremsdrehhebels 2 der halbkreisförmige Aufnahmeabschnitt 25 (und auch das/die erste/n Abtriebselement/e 15 des ersten Abtriebsabschnitts 14) um die Lagerwalzenachse 4, welche im Bremssattel verschwenkbar gelagert ist.

Im Bereich der Lagerwalzenachse 23 ist der zweite Abtriebsabschnitt 17 mit einer Bohrung 27 versehen, welche z.B. zur Zentrierung des zweiten Abtriebsabschnitts 17 dient.

Ein Teilkreisabschnitt des halbkreisförmigen Aufnahmeabschnitts 25, der zum Hebelarm 3 des Bremsdrehhebels 2 weist, ist mit einer Aufnahme 26 versehen, welche sich hier in einem Winkel von etwa 45° erstreckt und in radialer Ausdehnung etwa in der Mitte des halbkreisförmigen Aufnahmeabschnitts 25 angeordnet ist. Eine Länge der Aufnahme 26 in radialer Erstreckung beträgt ungefähr ein Drittel des Radius des halbkreisförmigen Aufnahmeabschnitts 25. Die Aufnahme 26 dient zur Aufnahme des zweiten Abtriebselementes 18, welches als ein Einlegeteil ausgebildet ist. In diesem Ausführungsbeispiel ist das zweite Abtriebselement 18 in der Aufnahme 26 formschlüssig aufgenommen. Dieses Einlegeteil kann z.B. durch Befestigungsmittel wie Schrauben, Nieten, Kerbstifte oder dgl. an oder/und in dem zweiten Abtriebsabschnitt 17 befestigt sein. Hierzu sind an den Enden der Aufnahme beispielhaft nicht näher bezeichnete Kreise angedeutet.

Das zweite Abtriebselement 18 kann aus einem Material geringer Festigkeit, z.B. einem geeigneten Kunststoff, hergestellt sein. Beispielsweise ist es ein Spritzgussteil mit einem Zahnsegmentabschnitt als Kronenverzahnung. In dem Fall, dass das zweite Abtriebselement 18 den Verschwenkwinkel des Bremsdrehhebels 2 auf den zugehörigen Sensor überträgt, sind keine großen Drehmomente erforderlich, da nur die Reibung, z.B. von Lagerungen, Wälzpaarungen in eventuellen Getriebestufen, und Schleifern von Potentiometern, u.dgl. zu überwinden ist. Anstelle der Kronenverzahnung kann natürlich auch einen Kegelradverzahnung oder eine andere verwendet werden.

Anstelle eines Kunststoffs kann auch z.B. ein Sinterwerkstoff zur Anwendung kommen. Es ist natürlich auch möglich, dass das zweite Abtriebselement 18 zur Übertragung von großen Drehmomenten vorgesehen ist. Dann sind sein Werkstoff und seine Dimensionierung entsprechend anzupassen. So kann das das zweite Abtriebselement 18 als Einlegeteil auch Stiftform für eine Triebstockverzahnung aufweisen.

Wenn der Hebelarm 3 des Bremsdrehhebels 2 z.B. durch einen Kolben bzw. Stößel eines Druckluftzylinders bei Zuspannung der Scheibenbremse 1 betätigt wird, wird diese Betätigungskraft auf eine Spreizmechanik, in diesem Fall der Bremshebel 2 mit dem ersten und zweiten Abtriebsabschnitt 14 und 17 übertragen. An beiden Enden der Lagerwalze 4, nämlich am ersten Abtriebsabschnitt 14 und am zweiten Abtriebsabschnitt 17 verzweigt der Kraftfluss in zwei parallele Kraftflüsse. Einer dieser Kraftflüsse ermöglicht eine Übertragung der Schwenkbewegung des Bremsdrehhebels 2 über die erste Abtriebskopplung 16 auf den Verschleißnachsteller 10. Diese Kraftübertragung dient zum Antrieb des Verschleißnachstellers 10 und der damit synchron gekoppelten Mitnehmerwelle 13 und muss eine dementsprechende ausreichende Stärke besitzen, um z.B. Reibungskräfte von Rutschkupplungen des Verschleißnachstellers 10 und des Synchronmittels 16 zu überwinden. Der andere dieser Kraftflüsse ermöglicht in dem gezeigten Ausführungsbeispiel eine Übertragung der Schwenkbewegung des Bremsdrehhebels 2 über die zweite Abtriebskopplung 17 auf einen Sensor für den Betätigungshub des Bremsdrehhebels 2. Natürlich kann auch eine andere Funktion damit erfüllt werden, welche den Verschwenkwinkel des Bremsdrehhebels 2 benötigt, wie z.B. ein zweiter Nachsteller oder eine Unterstützung desselben durch Kraftaufteilung.

Die Erfindung ist durch die oben beschriebenen Ausführungsbeispiele nicht beschränkt. Sie ist im Rahmen der beigefügten Ansprüche modifizierbar.

Es ist auch denkbar, dass eine Stirnradverzahnung bei dem zweiten Abtriebselement 18 benutzt wird, wobei die Zähne des zweiten Abtriebselementes 18 dann nicht parallel zur Lagerwalzenachse 23 verlaufen, sondern sich radial von der Lagerwalzenachse 23 nach außen erstrecken.

Auch der erste Abtriebsabschnitt 14 kann mit dem Einlegeteil ausgebildet sein, wobei das Einlegeteil als erstes Abtriebeselement 15 mit hoher Festigkeit zur Übertragung eines hohen Drehmoments zum Antrieb des Verschleißnachstellers 10 ausgestaltet ist.

### Bezugszeichenliste

- 1: Scheibenbremse
- 2: Bremsdrehhebel
- 3: Hebelarm
- 3a: Krafteinleitungsabschnitt
- 4: Lagerwalze
- 5: Brücke
- 6,6': Spindeleinheit
- 7, 7': Druckstück
- 8, 8': Druckstempel
- 9: Halterung
- 10: Verschleißnachsteller
- 10': Mitnehmer
- 11: Nachstellerantriebsrad
- 12: Nachstellerwelle
- 13: Mitnehmerwelle
- 14: Erster Abtriebsabschnitt
- 15: Erstes Abtriebselement
- 16: Erste Abtriebskopplung
- 17: Zweiter Abtriebsabschnitt
- 18: Zweites Abtriebselement
- 19: Zweite Abtriebskopplung
- 20: Zweites Antriebsrad
- 21: Körper
- 22: Lagerschale
- 23: Lagerwalzenachse
- 24: Befestigungsabschnitt
- 25: Aufnahmeabschnitt
- 26: Aufnahme
- 27: Bohrung
- 28: Befestigungsöffnung

## Patentansprüche

1. Bremsdrehhebel (2) einer Scheibenbremse (1), insbesondere für ein Kraftfahrzeug, wobei an mindestens einer axialen Stirnseite des Bremsdrehhebels (2) ein Abtriebsabschnitt (14, 17) mit jeweils einem Abtriebselement (15, 18) drehfest mit dem Bremsdrehhebel (2) verbunden angeordnet ist,
**dadurch gekennzeichnet,**
**dass** mindestens ein Abtriebselement (15, 18) eines der Abtriebsabschnitte (14, 17) als ein Einlegeteil ausgebildet ist.

2. Bremsdrehhebel (2) nach Anspruch 1, **dadurch gekennzeichnet, dass** das mindestens eine, als ein Einlegeteil ausgebildete Abtriebselement (18) lösbar in dem Abtriebsabschnitt (14, 17) eingesetzt und befestigt ist.

3. Bremsdrehhebel (2) nach Anspruch 2, **dadurch gekennzeichnet, dass** das mindestens eine, als ein Einlegeteil ausgebildete Abtriebselement (18) in dem Abtriebsabschnitt (14, 17) in einer Aufnahme (26) formschlüssig aufgenommen ist.

4. Bremsdrehhebel (2) nach einem der vorhergehenden Ansprüche, **dadurch gekennzeichnet, dass** das mindestens eine, als ein Einlegeteil ausgebildete Abtriebselement (18) ein Zahnradsegment ist.

5. Bremsdrehhebel (2) nach Anspruch 4, **dadurch gekennzeichnet, dass** das Zahnradsegment eine Kronenradverzahnung oder/und eine Stirnradverzahnung aufweist.

6. Bremsdrehhebel (2) nach Anspruch 4, **dadurch gekennzeichnet, dass** das Zahnradsegment eine Triebstockverzahnung aufweist.

7. Bremsdrehhebel (2) nach einem der Ansprüche 1 bis 3, **dadurch gekennzeichnet, dass** mindestens eine, als ein Einlegeteil ausgebildete Abtriebselement (18) mindestens einen Stift aufweist.

8. Bremsdrehhebel (2) nach einem der vorhergehenden Ansprüche, **dadurch gekennzeichnet, dass** das mindestens eine, als ein Einlegeteil ausgebildete Abtriebselement (18) aus einem Kunststoff oder einem Sinterwerkstoff hergestellt ist.

9. Bremsdrehhebel (2) nach einem der vorhergehenden Ansprüche, **dadurch gekennzeichnet, dass** das mindestens eine, als ein Einlegeteil ausgebildete Abtriebselement (18) aus einem metallischen Werkstoff mit hoher Festigkeit hergestellt ist.

10. Scheibenbremse (1), insbesondere für ein Kraftfahrzeug, mit einer Zuspannvorrichtung mit einem Bremsdrehhebel (2), einer Belagverschleißnachstellvorrichtung, welche mindestens einen mechanischen Verschleißnachsteller (10) aufweist, der vorzugsweise in eine Spindeleinheit (6, 6') der Scheibenbremse (1) einsetzbar und über ein erstes Abtriebselement (15) eines ersten Abtriebsabschnitts (14) des Bremsdrehhebel (2) mit dem Bremsdrehhebel (2) gekoppelt ist,
**dadurch gekennzeichnet,**
**dass** mindestens ein Abtriebselement (15, 18) eines der Abtriebsabschnitte (14, 17) des Bremsdrehhebels (2) als ein Einlegeteil ausgebildet ist.

11. Scheibenbremse (1) nach Anspruch 10, **dadurch gekennzeichnet, dass** der Bremsdrehhebel (2) nach einem der Ansprüche 1 bis 9 ausgebildet ist.

12. Scheibenbremse (1) nach Anspruch 10 oder 11, **dadurch gekennzeichnet, dass** die Scheibenbremse (1) druckluftbetätigt ist.

## Claims

1. Brake rotary lever (2) of a disc brake (1), in particular for a motor vehicle, wherein an output section (14, 17) having a respective output element (15, 18) is arranged on at least one axial end face of the brake rotary lever (2) connected non-rotatably to said brake rotary lever (2),
**characterised in that**
at least one output element (15, 18) of one of the output sections (14, 17) is designed as an insert part.

2. Brake rotary lever (2) according to claim 1, **characterised in that** the at least one output element (18) designed as an insert part is inserted and fastened detachably in the output section (14, 17).

3. Brake rotary lever (2) according to claim 2, **characterised in that** the at least one output element (18) designed as an insert part is received form-fittingly in a receptacle (26) in the output section (14, 17).

4. Brake rotary lever (2) according to any one of the preceding claims, **characterised in that** the at least one output element (18) designed as an insert part is a segment of a gear wheel.

5. Brake rotary lever (2) according to claim 4, **characterised in that** the gear wheel segment has a crown toothing and/or a spur gear toothing.

6. Brake rotary lever (2) according to claim 4, **characterised in that** the gear wheel segment has a lantern gear toothing.

7. Brake rotary lever (2) according to any one of claims 1 to 3, **characterised in that** at least one output element (18) designed as an insert part has at least one pin.

8. Brake rotary lever (2) according to any one of the preceding claims, **characterised in that** the at least one output element (18) designed as an insert part is produced from a plastics material or a sintered material.

9. Brake rotary lever (2) according to any one of the preceding claims, **characterised in that** the at least one output element (18) designed as an insert part is produced from a high-strength metal material.

10. Disc brake (1), in particular for a motor vehicle, having an application device with a brake rotary lever (2), a lining wear adjustment device having at least one mechanical wear adjuster (10) which can preferably be inserted into a spindle unit (6, 6') of the disc brake (1) and is coupled to the brake rotary lever (2) via a first output element (15) of a first output section (14) of the brake rotary lever (2),
**characterised in that**
at least one output element (15, 18) of one of the output sections (14, 17) of the brake rotary lever (2) is designed as an insert part.

11. Disc brake (1) according to claim 10, **characterised in that** the brake rotary lever (2) is configured according to any one of claims 1 to 9.

12. Disc brake (1) according to claim 10 or 11, **characterised in that** the disc brake (1) is actuated pneumatically.

## Revendications

1. Levier rotatif de freinage (2) d'un frein à disque, en particulier pour un véhicule à moteur, dans lequel une section d'entraînement (14, 17) à un élément de sortie respectif (15, 18) est disposée à au moins un côté de face axial du levier rotatif de freinage, en étant reliée, assujettie en rotation, au levier rotatif de freinage (2),
**caractérisé en ce**
**qu'**au moins un élément de sortie (15, 18) d'une desdites sections d'entraînement (14, 17) est configuré sous forme d'une pièce encastrée.

2. Levier rotatif de freinage (2) selon la revendication 1, **caractérisé en ce que** ledit au moins seul élément de sortie (18), configuré sous forme d'une pièce encastrée, est inséré et fixé de manière détachable dans ladite section d'entraînement (14, 17)

3. Levier rotatif de freinage (2) selon la revendication 2, **caractérisé en ce que** ledit au moins seul élément de sortie (18), configuré sous forme d'une pièce encastrée, est reçu, par complémentarité de formes, dans un élément de support (26) dans ladite section d'entraînement (14, 17).

4. Levier rotatif de freinage (2) selon une quelconque des revendications précédentes, **caractérisé en ce que** ledit au moins seul élément de sortie (18), configuré sous forme d'une pièce encastrée, est un segment de roue dentée.

5. Levier rotatif de freinage (2) selon la revendication 4, **caractérisé en ce que** ledit segment de roue dentée présente une denture à roue à denture frontale ou/et une denture à pignon droit.

6. Levier rotatif de freinage (2) selon la revendication 4, **caractérisé en ce que** ledit segment de roue dentée présente une denture à broche filetée.

7. Levier rotatif de freinage (2) selon une quelconque des revendications 1 à 3, **caractérisé en ce qu'**au moins un élément de sortie (18), configuré sous forme d'une pièce encastrée, comprend au moins une broche.

8. Levier rotatif de freinage (2) selon une quelconque des revendications précédentes, **caractérisé en ce que** ledit au moins seul élément de sortie (18), configuré sous forme d'une pièce encastrée, est fait en une matière synthétique ou une matière frittée.

9. Levier rotatif de freinage (2) selon une quelconque des revendications précédentes, **caractérisé en ce que** ledit au moins seul élément de sortie (18), configuré sous forme d'une pièce encastrée, est fait en une matière métallique ayant une grande résistance.

10. Frein à disque (1), en particulier pour un véhicule à moteur, comprenant un dispositif de serrage de frein à un levier rotatif de freinage (2), un dispositif de rattrapage de l'usure de la garniture, qui est muni d'au moins un ré-ajusteur d'usure mécanique (10), qui est apte à être inséré dans une unité à broche filetée (6, 6') du frein à disque, de préférence, et qui est accouplé via un premier élément de sortie (15) d'une première section d'entraînement (14) dudit levier rotatif de freinage (2) audit levier rotatif de freinage (2),
**caractérisé en ce**
**qu'**au moins un élément de sortie (15, 18) d'une desdites sections d'entraînement (14, 17) dudit levier rotatif de freinage (2) est configuré sous forme d'une pièce encastrée.

11. Frein à disque (1) selon la revendication 10, **caractérisé en ce que** ledit levier rotatif de freinage (2) est configuré selon une quelconque des revendications 1 à 9.

12. Frein à disque (1) selon la revendication 10 ou 11, **caractérisé en ce que** le frein à disque (1) est commandé par air comprimé.
